# EUROPEAN PATENT SPECIFICATION

(11) **EP 1 013 502 B1**
(45) Date of publication and mention of the grant of the patent: **19.03.2003**
(21) Application number: 99124416.1
(22) Date of filing: 07.12.1999
(51) Int. Cl.: B60R 1/06

(54) **An external rear-view mirror of a vehicle, in particular an industrial vehicle**
Aussenrückblickspiegel für Kraftfahrzeuge, insbesondere Nutzfahrzeuge
Rétroviseur extérieur pour véhicule, en particulier véhicule industriel

(30) Priority: 09.12.1998 IT TO981031
(43) Date of publication of application: 28.06.2000
(73) Proprietor: Ficomirrors Italia S.r.l. a s.u., 10078 Venaria Reale (Torino) (IT)
(72) Inventor: Lupo, Elio, 10093 Collegno (IT)
(74) Representative: Jorio, Paolo

(56) References cited:
- DE-U- 9 308 052
- FR-A- 2 644 413

## Description

The present invention relates to an external rear-view mirror of a vehicle, in particular an industrial vehicle.

In general, known external rear-view' mirrors comprise a reflecting body, a support body for the reflecting body and an arm connecting the support body to the vehicle. The arm is separate from the support body, is generally tubular and C-shaped and is secured to a vehicle structure by known articulated devices of the vehicle which enable the rear-view mirror to rotate in increments and to be closed up against the structure.

Known external rear-view mirrors of the type described above, although widely used, are not very satisfactory as they entail relatively high production and assembly times and costs and are relatively heavy.

The above is largely due to the production characteristics of the rear-view mirror and to the large number of components forming this rear-view mirror.

DE 9308052 U discloses a rear-view mirror comprising a reflecting body, a plate which supports the reflecting body, two arms for connecting the plate to a vehicle, and an external hollow body housing the plate. The plate is integrally formed with the two arms and is coupled to the hollow body by means of screws.

The rear-view mirror in DE 9308052 U generates relatively high times and costs as regards the assembly of these components and the regulation of the relative position of these components.

The object of the present invention is to provide an external rear-view mirror which makes it possible simply and economically to resolve the above-described drawbacks.

The present invention therefore relates to an external rear-view mirror of a vehicle, in particular an industrial vehicle, according to claim 1.

The invention will now be described with reference to the accompanying drawings, which show a non-limiting embodiment thereof, and in which:
Fig. 1 shows, in perspective and partly in cross-section, a preferred embodiment of an external rear-view mirror of the present invention coupled to a vehicle, part of which is shown diagrammatically;
Fig. 2 shows, on a reduced scale and in cross-section, an intermediate portion of the rear-view mirror of Fig. 1;
Fig. 3 shows, on an enlarged scale and partly in cross-section, an end portion of the rear-view mirror of Fig. 1;
Figs. 4 and 5 are Figures similar to Fig. 3 and show a first and a second variant of the portion of Fig. 3.

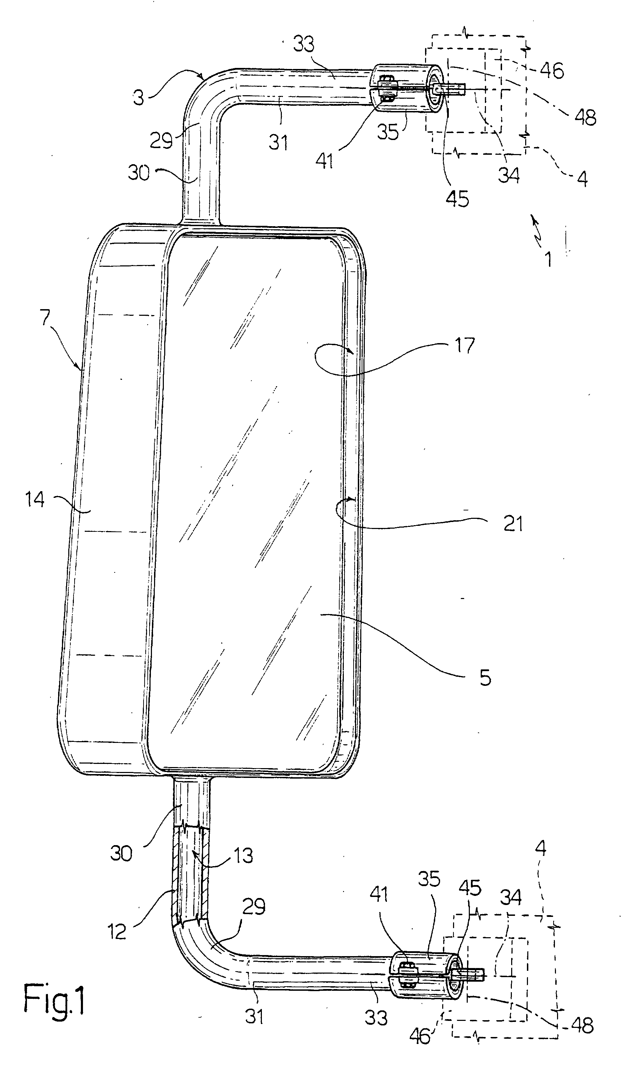

In Fig. 1, a vehicle shown in diagram form, in particular an industrial vehicle, is shown overall by 1 and is provided with an external rear-view mirror 3 making it possible to see areas that are to the side and rear of a driving position (not shown) of the vehicle 1 and comprises a structure 4 (shown diagrammatically in Fig. 1) for the attachment of the mirror 3.

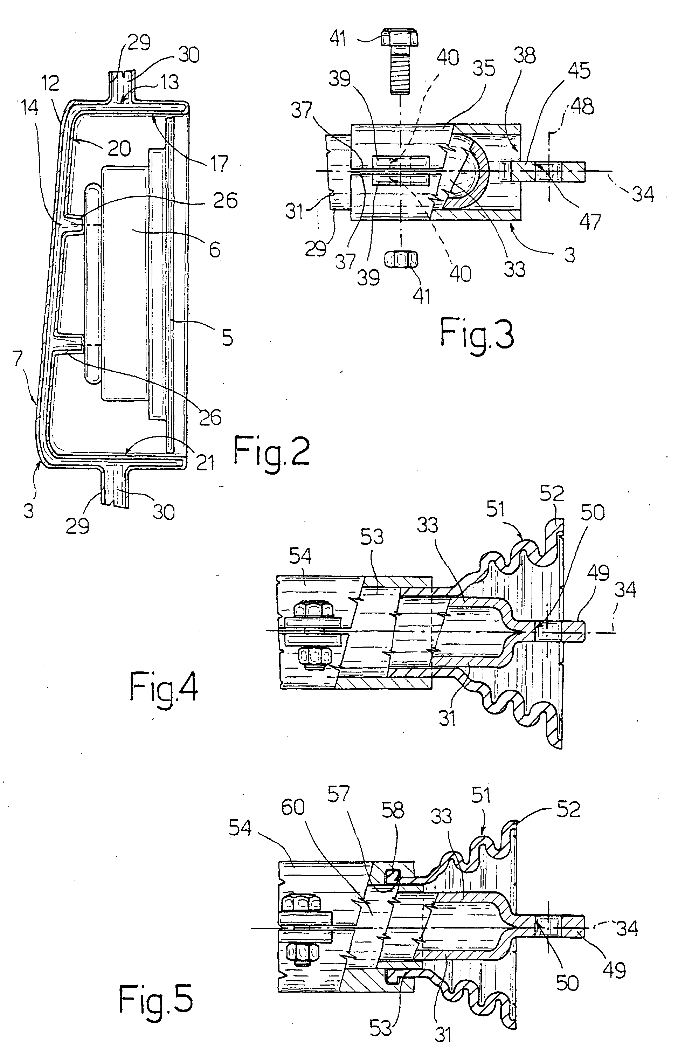

As shown in Figs. 1 and 2 in particular, the mirror 3 comprises a rectangular reflecting body 5 transversely spaced from the structure 4, a positioning device 6 for the adjustment of the angular position of the body 5 with respect to the driving position of the vehicle 1, both of which are known and connected together in a known manner and are not therefore described in further detail, and a body 7 for the support of the body 5 and the device 6 and attachment to the structure 4.

In Fig. 1 and in particular in Fig. 2, the body 7 has a single shaped wall 12 bounding an internal cavity 13 and is made in one piece from plastic material and is preferably obtained by blowing.

The body 7 comprises an intermediate portion 14 bounding a cavity 17 or rectangular seat which houses the body 5 and the device 6 and is bounded by a base surface 20 and a peripheral surface 21 surrounding the reflecting body 5. The intermediate portion 14 has a plurality of projections 26 for the connection of the device 6 and the body 5 to this portion 14, extending into the seat 17 from the base surface 20. The projections 26, two of which are shown in Fig. 2, are coupled to the device 6 in a known manner that is not described in further detail and are formed rigidly with the portion 14.

In Fig. 1, the body 7 further comprises a pair of hollow arms 29 for the connection of the portion 14 to the structure 4, which are formed rigidly with the wall 12 and preferably have a cross-section and a profile shaped in a known manner that is not described in further detail and are adapted to satisfy the aerodynamic requirements of the vehicle 1.

In the particular embodiment described, each arm 29 is L-shaped and comprises a pair of rectilinear tubular sections 30 and 31 transverse to one another; each section 30 extends in a fixed position from the portion 14 on the side opposite the section 30 of the other arm 29 in a direction substantially at right angles to an external boundary surface of the portion 14, while each section 31 is connected to the relative section 30 and extends towards the structure 4.

As shown in Figs. 1 and 3, each section 31 comprises a free end portion 33 which has a relative axis 34 and to which there is coupled a relative elastically deformable clamp 35 of the mirror 3 for connection to the structure 4. Each clamp 35 coaxially surrounds the relative portion 33, is bounded internally by a surface 38 disposed in contact with the relative portion 33 and has a longitudinal slot bounded by two facing edges 37. From both edges 37 of each clamp 35, there extend respective external plate projections 39 which are disposed in a position facing one another and are clamped against one another by a releasable connection device of the clamp 35 on the relative portion 33, in particular by means of a bolt 41 inserted into through holes 40 obtained through these projections 39.

Each of the two clamps 35 comprises a plate end portion 45 for connection to the vehicle 1, which extends from the surface 38 in a position diametrically opposite to the edges 37, prolonging the relative portion 33 along the relative axis 34, and is provided with a through hole 47 having an axis extending in a direction transverse to the axis 34 of the relative portion 33 and parallel to the axis 48 of the other clamp 35 for connection to a relative device 46 (shown diagrammatically in Fig. 1), in particular a known articulated device, that is not described in further detail, of the structure 4.

The devices 46 are adapted to enable rapid and incremental rotations of the rear-view mirror 3 with respect to the structure 4 about the axes 48 in order to displace this mirror 3 between an operating position (shown in Fig. 1) and a rest position (not shown) in which the mirror 3 is adjacent to the structure 4 of the vehicle 1.

According to the variants shown in Figs. 4 and 5, each portion 33 rigidly bears in a projecting manner a plate portion 49 for connection to the vehicle 1, which, similarly to the portion 45, extends along the relative axis 34 and is provided with a relative transverse through hole 50 for connection to a relative device 46 of the structure 4. Each portion 33 is surrounded by a body 51 which comprises a bellows portion 52 surrounding the relative portion 49 for the protection of the connection between this portion 49 and the relative device 46, and a cylindrical tubular portion 53 coupled in a releasable manner to the relative portion 33 by means of a relative elastically deformable clamp 54 axially spaced from the portion 49.

With reference to the variant shown in Fig. 4, each clamp 54 is substantially tubular, is separate from the relative body 51, and cooperates over its entire length with the tubular portion 53 in order to clamp the portion 53 on the relative portion 33.

With reference to the variant shown in Fig 5, each tubular portion 53 is provided with an external annular end projection 58, while each clamp 54 is preferably rigid with the relative body 51, is provided with an intermediate inner annular seat 57 engaged by the relative projection 58 and clamps the tubular portion 53 on a respective elastically deformable sleeve 60 interposed between the clamp 54 and the portion 33.

It will be appreciated from the above description that the external rear-view mirror as described enables, in the first instance, a substantial reduction of costs.

The mirror 3 comprises a single body 7 made from a single piece of plastic material and therefore makes it possible, with respect to known solutions, to reduce the number of components making up the mirror 3 and therefore its production costs. The body 7 may then be made in one piece with the attachment portions 49, thereby avoiding the use of the clamps 35 and further reducing costs. The assembly costs of the mirror 3 are therefore also reduced, since it is not necessary to assemble any arm for connection to the support body and to regulate its relative position. Moreover, both the clamps 35 and the clamps 54 are extremely simple to couple to the end portions 33 as a result of which their relative assembly costs are extremely small.

The mirror 3 is, moreover, relatively light since the body 7 is made by a blowing process and therefore has a wall 12 bounding an inner cavity 13.

The arms 29 and the intermediate portion 14 do not require coupling devices interposed between them and therefore maintain a position that is relatively constant over time, as a result of which the regulation characteristics of the mirror 3 remain unchanged as time passes, thereby improving the reliability of the mirror 3 with respect to known solutions.

Lastly, the material used for the body 7 can be readily recycled, particularly as the body 7 is made entirely from plastic material.

## Claims

1. An external rear view mirror (3) of a vehicle (1), in particular an industrial vehicle, this rear-view mirror (3) comprising a reflecting body (5), projections (26) for the connection of the reflecting body (5) to a cup-shaped portion (14) housing at least said projections (26), and a pair of connection arms (29) extending from said cup-shaped portion (14) and adapted to be connected to the vehicle (1), and **characterised in that** the projections (26), the cup-shaped portion (14) and the connection arms (29) form parts of a single body (7) made of a single piece of plastic material; the single body (7) defining a continuous inner chamber (13), which has an intermediate portion (14) defined by said cup-shaped portion (14), and two lateral portions (29) defined by the respective connection arm (29) and the lateral portions (29) communicating with the intermediate portion (14).

2. A rear-view mirror as claimed in claim 1, **characterised in that** the connection arms (29) each comprise an end portion (49) defining first means for the connection of the single body (7) to the vehicle (1) and **in that** these first connection means (49) are adapted to be positively coupled to second connection means (46) borne by the vehicle (1).

3. A rear-view mirror as claimed in claim 2, **characterised in that** the end portion (49) is a plate portion provided with at least one through hole (50).

4. A rear-view mirror as claimed in claim 1, **characterised in that** it further comprises third connection means (45) adapted to be positively coupled to second connection means (46) borne by the vehicle (1) and first releasable connection means (40, 41) adapted to connect the third connection means (45) to each of the connection arms (29).

5. A rear-view mirror as claimed in claim 2 or 3, **characterised in that** it comprises, for each connection arm (29), a bellows body (51) for the protection of the connection means (49, 46) and second releasable connection means (54) adapted to connect the bellows body (51) to the respective connection arm (29).

6. A rear-view mirror as claimed in any one of the preceding claims, **characterised in that** the single body (7) is provided with the projections (26) formed rigidly with the single body (7) for the connection of the reflecting body (5).

7. A rear-view mirror as claimed in any one of the preceding claims, **characterised in that** the cup-shaped portion (14) is formed by an intermediate cup-shaped portion (14) of the single body (7) and is bounding a cavity (17) which houses the reflecting body (5).

8. A support body (7) for an external rear-view mirror (3) of a vehicle (1), in particular an industrial vehicle, this support body (7) comprising projections (26) adapted to connect to a reflecting body (5) of the rear-view mirror (3) to a cup-shaped portion (14) housing at least said projections (26), and a pair of connection arms (29) extending from the cup-shaped portion (14) and adapted to be connected to the vehicle (1), **characterised in that** it is made of a single piece of plastic material and defines a continuous inner chamber (13), which has an intermediate portion (14) defined by said cup-shaped portion (14), and two lateral portions (29) defined by the respective connection arm (29) and the lateral portions (29) communicating with the intermediate portion (14).

9. A support body as claimed in claim 8, **characterised in that** the connection arms (29) each comprise a relative shaped end portion (49) defining first means for the connection of the support body (7) to the vehicle (1), these first connection means (49) being adapted to be positively coupled to second connection means (46) borne by the vehicle (1).

10. Method for manufacturing an external rear view mirror (3) of a vehicle (1), in particular an industrial vehicle, as claimed in claims 1 to 7; this rear-view mirror (3) comprising a reflecting body (5), projections (26) for the connection of the reflecting body (5) to a cup-shaped portion (14) housing at least said projections (26), and a pair of connection arms (29) extending from the cup-shaped portion (14) and adapted to be connected to the vehicle (1) ; the method being **characterised by** forming a single body (7) of a single piece of plastic material by blowing; the single body (7) comprising the projections (26), the cup-shaped portion (14) and the connection arms (29) and defining a continuous inner chamber (13), which has an intermediate portion (14) defined by said cup-shaped. portion (14), and two lateral portions (29), each defined by the respective connection arm (29) and the lateral portions (29) communicating with the intermediate portion (14).

## Patentansprüche

1. Außenrückspiegel (3) eines Fahrzeuges (1), insbesondere eines Nutzfahrzeuges, wobei dieser Rückspiegel (3) einen Reflektorkörper (5) aufweist, Vorsprünge (26) für eine Verbindung des Reflektorkörpers (5) mit einem tassenförmigen Abschnitt (14), der zumindest die Vorsprünge (26) beherbergt, und ein Paar Verbindungsarme (29), die sich von dem tassenförmigen Abschnitt (14) aus erstrecken und dazu angepaßt sind, mit dem Fahrzeug (1) verbunden zu werden, und **dadurch gekennzeichnet, daß** die Vorsprünge (26), der tassenförmige Abschnitt (14) und die Verbindungsarme (29) Teile eines einzigen Körpers (7) ausbilden, der aus einem einzigen Stück aus Plastik hergestellt ist; daß der einzige Körper (7) eine durchgehende innere Kammer (13) ausbildet, die einen Zwischenabschnitt (14) besitzt, der von dem tassenförmigen Abschnitt (14) begrenzt wird, und zwei seitliche Abschnitte (29), die von dem jeweiligen Verbindungsarm (29) und den seitlichen Abschnitten (29) gebildet werden und mit dem Zwischenabschnitt (14) in Verbindung stehen.

2. Rückspiegel gemäß Anspruch 1, **dadurch gekennzeichnet, daß** jeder der verbindungsarme (29) einen Endabschnitt (49) aufweist, der erste Vorrichtungen für die Verbindung des einzigen Körpers (7) mit dem Fahrzeug (1) bildet, und daß diese ersten Verbindungsvorrichtungen (49) dazu angepaßt sind, wirksam mit der zweiten Verbindungsvorrichtung (46), die von dem Fahrzeug (1) stammt, gekoppelt zu werden.

3. Rückspiegel gemäß Anspruch 2, **dadurch gekennzeichnet, daß** der Endabschnitt (49) ein Plattenabschnitt ist, der mit wenigstens einem Durchgangsloch (50) versehen ist.

4. Rückspiegel gemäß Anspruch 1, **dadurch gekennzeichnet, daß** er des weiteren eine dritte Verbindungsvorrichtung (45) aufweist, die dazu angepaßt ist, wirksam mit der zweiten Verbindungsvorrichtung (46), die von dem Fahrzeug (1 stammt, gekoppelt zu werden, und eine erste lösbare Verbindungsvorrichtung (40, 41), die dazu angepaßt ist, die dritte Verbindungsvorrichtung (45) mit jedem der Verbindungsarme (29) zu verbinden.

5. Rückspiegel gemäß Anspruch 2 oder 3, **dadurch gekennzeichnet, daß** er für jeden Verbindungsarm (29) einen Faltenbalg (51) zum Schutz der Verbindungsvorrichtungen (49, 46) aufweist, und eine zweite lösbare Verbindungsvorrichtung (54), die dazu angepaßt ist, den Faltenbalg (51) mit dem jeweiligen Verbindungsarm (29) zu verbinden.

6. Rückspiegel gemäß einem der vorhergehenden Ansprüche, **dadurch gekennzeichnet, daß** der einzige Körper (7) mit den Vorsprüngen (26) versehen ist, die starr mit dem einzigen Körper (7) ausgebildet sind, zur Verbindung des Reflektorkörpers (5).

7. Rückspiegel gemäß einem der vorhergehenden Ansprüche, **dadurch gekennzeichnet, daß** der tassenförmige Abschnitt (14) durch einen tassenförmigen Zwischenabschnitt (14) des einzigen Körpers (7) gebildet wird und einen Hohlraum (17) abgrenzt, der den Reflektorkörper (5) beherbergt.

8. Abstützkörper (7) für einen Außenrückspiegel (3) eines Fahrzeuges (1), insbesondere eines Nutzfahrzeuges, wobei dieser Abstützkörper (7) Vorsprünge (26) aufweist, die dazu angepaßt sind, einen Reflektorkörper (5) des Rückspiegels (3) mit einem tassenförmigen Abschnitt (14), der zumindest die Vorsprünge (26) beherbergt, zu verbinden, und ein Paar Verbindungsarme (29), die sich von dem tassenförmigen Abschnitt (14) aus erstrecken und dazu angepaßt sind, mit dem Fahrzeug (1) verbunden zu werden, **dadurch gekennzeichnet, daß** er aus einem einzigen Stück Plastik hergestellt ist und eine durchgehende innere Kammer (13) ausbildet, die einen Zwischenabschnitt (14) besitzt, der von dem tassenförmigen Abschnitt (14) gebildet wird, und zwei seitliche Abschnitte (29), die von dem jeweiligen Verbindungsarm (29) gebildet werden, und wobei die seitlichen Abschnitte (29) mit dem Zwischenabschnitt (14) in Verbindung stehen.

9. Abstützkörper gemäß Anspruch 8, **dadurch gekennzeichnet, daß** jeder der Verbindungsarme (29) einen relativgeformten Endabschnitt (49) aufweist, der erste Vorrichtungen zur Verbindung des Abstützkörpers (7) mit dem Fahrzeug (1) bildet, wobei diese ersten Verbindungsvorrichtungen (49) dazu angepaßt sind, mit einer zweiten Verbindungsvorrichtung (46), die von dem Fahrzeug (1) stammt, wirksam gekoppelt zu werden.

10. Verfahren zur Herstellung eines Außenrückspiegels (3) eines Fahrzeuges (1), insbesondere eines Nutzfahrzeuges, gemäß einem der Ansprüche 1 bis 7; wobei dieser Rückspiegel (3) einen Reflektorkörper (5) aufweist, Vorsprünge (26) für eine Verbindung des Reflektorkörpers (5) mit einem tassenförmigen Abschnitt (14), der zumindest die Vorsprünge (26) beherbergt. und ein Paar Verbindungsarme (29), die sich von dem tassenförmigen Abschnitt (14) aus erstrecken und dazu angepaßt sind, mit dem Fahrzeug (1) verbunden zu werden, wobei das verfahren **gekennzeichnet ist durch** Ausbilden eines einzigen Körpers (7) aus einem einzigen Stück Plastik **durch** blasen; wobei der einzige Körper (7) die Vorsprünge (26), den tassenförmigen Abschnitt (14) und die Verbindungsarme (29) aufweist und eine durchgehende innere Kammer (13) bildet, die einen Zwischenabschnitt (14) besitzt, der von dem tassenförmigen Abschnitt (14) gebildet wird, und zwei seitliche Abschnitte (29), von denen jeder **durch** den jeweiligen Verbindungsarm (29) und den seitlichen Abschnitten (29), die mit dem Zwischenabschnitt (14) in Verbindung stehen, gebildet wird.

## Revendications

1. Rétroviseur extérieur (3) d'un véhicule (1), en particulier pour un véhicule industriel, ce rétroviseur (3) comprenant un corps réfléchissant (5), des saillies (26) pour le raccordement du corps réfléchissant (5) sur une portion en forme de coupelle (14) logeant au moins lesdites saillies (26), et une paire de bras de raccordement (29) s'étendant depuis la portion en forme de coupelle (14) et aptes à être raccordés sur le véhicule 1, et
**caractérisé en ce que**,
les saillies (26), la portion en forme de coupelle (14) et les bras de raccordement (29) forment les parties d'un corps d'un seul tenant (7) faite d'une pièce d'un seul tenant en matériau plastique; le corps d'un seul tenant (7) définissent une chambre intérieure continue (13), qui présente une portion intermédiaire (14) définie par ladite portion en forme de coupelle (14) et deux portions latérales (29), définies par le bras de raccordement respectif (29) et les portions latérales (29) communiquant avec la portion intermédiaire (14).

2. Rétroviseur selon la revendication 1,
**caractérisé en ce que**,
les bras de raccordement (29) comprennent chacun une portion d'extrémité (49) définissant des premiers moyens pour le raccordement du corps d'un seul tenant (7) sur le véhicule (1) et **en ce que** ces premiers moyens de raccordement (49) sont aptes à être accouplés positivement à des deuxièmes moyens de raccordement (46) montés sur le véhicule (1).

3. Rétroviseur selon la revendication 2, **caractérisé en ce que**,
la portion d'extrémité (49) est une portion plate munie d'au moins un trou traversant (50).

4. Rétroviseur selon la revendication 1,
**caractérisé en ce que**,
il comprend de plus des troisièmes moyens de raccordement (45) aptes à être positivement accouplés à des deuxièmes moyens de raccordement (46) montés sur le véhicule (1) et des premiers moyens de raccordement libérables (40,41) aptes à raccorder les troisièmes moyens de raccordement (45) à chacun des bras de raccordement (29).

5. Rétroviseur selon la revendication 2 ou 3,
**caractérisé en ce que**,
il comprend pour chaque bras de raccordement (29), un corps de soufflet (51) pour la protection des moyens de raccordement (49,46) et des deuxièmes moyens de raccordement libérables (54) aptes à raccorder le corps de soufflet (51) au bras de raccordement respectif (29).

6. Rétroviseur selon l'une quelconque des revendications précédentes,
**caractérisé en ce que**,
la corps d'un seul tenant (7) est muni des saillies (26) formées rigidement avec le corps d'un seul tenant (7) pour le raccordement du corps réfléchissant (5).

7. Rétroviseur selon l'une quelconque des revendications précédentes,
**caractérisé en ce que**,
la portion en forme de coupelle (14) est formée par une portion intermédiaire en forme de coupelle (14) du corps d'un seul tenant (7) et délimite une cavité (17) qui loge le corps réfléchissant (5).

8. Corps de support (7) pour un rétroviseur extérieur (3) d'un véhicule (1), en particulier sur un véhicule industriel, ce corps de support (7) comprenant des saillies (26) aptes à raccorder un corps réfléchissant (5) du rétroviseur (3) à une portion en forme de coupelle (14) logeant au moins lesdites saillies (26), et une paire de bras de raccordement (29) s'étendant depuis la portion en forme de coupelle (14) et aptes à être raccordés au véhicule (1),
**caractérisé en ce que**,
il est constitué à partir d'une pièce d'un seul tenant en matière plastique et définit une chambre intérieure continue (13), qui présente une portion intermédiaire (14) définie par ladite portion en forme de coupelle (14), et deux portions latérales (29), définies par le bras de raccordement respectif (29) et les portions latérales (29) communiquant avec la portion intermédiaire (14).

9. Corps de support selon la revendication 8,
**caractérisé en ce que**,
les bras de raccordement (29) comprennent chacun une portion d'extrémité formée relative (49) définissant des premiers moyens pour le raccordement du corps de support (7) sur le véhicule (1), ces premiers moyens de raccordement (49) étant aptes à être accouplés positivement à des deuxièmes moyens de raccordement (46) montés sur le véhicule (1).

10. Procédé pour la fabrication d'un rétroviseur extérieur (3) d'un véhicule (1), en particulier un véhicule industriel, selon les revendications 1 à 7; ce rétroviseur (3) comprenant un corps réfléchissant (5), des saillies (26) pour le raccordement du corps réfléchissant (5) à une portion en forme de coupelle (14) logeant au moins lesdites saillies (26), et une paire de bras de raccordement (29) s'étendant depuis la portion en forme de coupelle (14) et aptes à être raccordés au véhicule (1); le procédé étant **caractérisé en ce que**,
il est formé un corps d'un seul tenant (7) d'une pièce d'un seul tenant en matière plastique par soufflage; le corps d'un seul tenant (7) comprenant les saillies (26), la portion en forme de coupelle (14) et les bras de raccordement (29) et définissant une chambre intérieure continue (13), qui présente une portion intermédiaire (14) définie par ladite portion en forme de coupelle (14), et deux portions latérales (29), chacune définie par le bras de raccordement respectif (29) et les portions latérales (29) communiquant avec la portion intermédiaire (14).
